Europäisches Patentamt

European Patent Office

Office européen des brevets

(11) Publication number: 0 361 037
A2

# EUROPEAN PATENT APPLICATION

(21) Application number: 89114599.7

(22) Date of filing: 08.08.89

(51) Int. Cl.⁵: G21C 3/18

(30) Priority: 27.09.88 US 250058

(43) Date of publication of application:
04.04.90 Bulletin 90/14

(84) Designated Contracting States:
BE CH DE ES FR GB LI SE

(71) Applicant: COMBUSTION ENGINEERING, INC.
1000 Prospect Hill Road
Windsor Connecticut 06095(US)

(72) Inventor: Hatfield, Stephen Charles
80 Day Street
Granby Connecticut 06035(US)
Inventor: Rotondo, Philip Louis
8 Watson Drive
Simsbury Connecticut 06070(US)
Inventor: Broders, Richard Porter
69 East Street
North Granby Connecticut 06060(US)

(74) Representative: Gross, Gernot K.
Kleiberweg 5
D-6200 Wiesbaden(DE)

(54) Self-locking plenum spring.

(57) A nuclear fuel rod (10) having a tube (12) of cladding material with an active fuel length of a column of pellets (20) and a plenum having an end cap (16) and containing a coil spring (30) to bias the column of pellets, which spring includes an active region (32) and a self-locking region (36). The active region (32) is of coils smaller than the tube inner diameter and biases the column of pellets (20). The self-locking region (36) coils are larger so that after being inserted in a torqued, reduced diameter condition, they are released and expand to hold the spring in an axial position by engagement with the tube wall. A bight (38) on the end of the self-locking region (36) assists in torquing the coils.

Fig. 1

## SELF-LOCKING PLENUM SPRING

### BACKGROUND OF THE INVENTION

In the field of nuclear reactors, particularly in a pressurized water reactor (PWR), a typical fuel rod is a tube of cladding material having a lower end cap, an upper end cap, an active fuel length made up of a column of fuel pellets and a plenum containing a coil spring to bias the column of pellets.

The fuel rod plenum spring is designed to retain the fuel pellet column in position during shipment to the site, and to have sufficient travel capability to accommodate differential thermal expansion and radiation-induced dimensional changes between the pellet column and the cladding tube. It must perform these functions without fracturing or binding in the cladding tube inner diameter (I.D.).

The length of the fuel rod plenum region is longer than that necessary to enclose a spring which satisfies these requirements. However, prior art design practice has been to use the simple approach of a full-length spring. This has resulted in a spring with more volume than necessary, since additional coils are provided to fill the extra length. Penalties associated with the extra coils were not significant until recent years, when higher burnup targets increased the need for void volume within the fuel rod.

Another drawback of prior art designs is the need to compress the spring with the end cap during the cap welding process. This becomes a nuisance for either manual or automated assembly. In the case of fuel rods with an electromagnetic force welding process, the tight contact between the cap and spring also necessitates the use of an insulating material on the end of the spring. The cost for the application of the material approximately doubles the cost of the spring.

### SUMMARY OF THE INVENTION

The fuel rod plenum spring of the invention offers both manufacturing and fuel performance advantages by means of a structure which includes two regions.

An "active" region of the spring has an outer diameter sized to provide free clearance with the cladding I.D. throughout operation, a squared and ground end coil, and a combination of wire size and number of coils that retains the fuel pellet column in position during shipping and handling and accommodates thermal expansion and radiation-induced dimensional changes between the pellet column and the tube of cladding material.

A "self-locking" region of the novel spring has several coils with diameter larger than that of the cladding tube I.D. and a bight feature to assist installing of the spring in a unique manner. Installation is accomplished by first inserting the spring into the cladding tube with the active region toward the pellet column. Since diametrical clearance is present, no significant resistance occurs at this stage. When contact is made between the cladding and the self-locking region, frictional resistance would build rapidly if straight axial insertion was attempted. However, an insertion operation is used which supplies both torque and axial force. A slotted tip of an insertion tool engages the installation feature in the form of a bight at the end of the spring. Torque is applied to the bight in a direction opposite to the winding direction of the spring coils, which causes a reduction in the coils' outer diameter.

The proper combination of spring diameter and number of coils in the self-locking region, torque capability of the tool, and axial insertion rate of the spring into the cladding will result in a smooth feed of the spring to the desired depth in the tube. The active region of the spring is free to rotate within the cladding, except for a small friction force at the end which presses against the pellet column. The friction force builds as the spring compresses to its required preload value. The squared and ground face of the spring at the end, and the orientation of the cut end coil, will minimize this friction.

When the spring has reached the proper depth inside the cladding tube, the torque is relieved. The spring attempts to relax back to its original diameter in the self-locking region but is constrained by the cladding I.D. The resulting radial interference creates a contact pressure which is sufficient to prevent axial sliding of the spring. the insertion tool is then withdrawn and the preloaded spring remains in position. End cap welding can now be performed without the hindrance of a plenum spring that must be compressed as part of the welding process. Since the spring does not contact the end cap, no electrical insulation is necessary.

The self-locking section of the spring remains in position during handling and shipment, and possibly during operation, while the active region of the spring performs the typical past functions of a plenum spring. Therefore, the additional coils previously used to occupy length are unnecessary and the spring volume is greatly reduced. Depending on the amount of stress relaxation which occurs in the spring due to high temperature and radiation effects, the self-locking region may slip after a period of operation. In any case, the spring will provide the required amount of travel to accommodate pellet expansion and radiation growth.

If for some reason removal is necessary, it can be performed by turning the spring in the same direction as during installation while pulling on the bight.

## BRIEF DESCRIPTION OF THE DRAWINGS

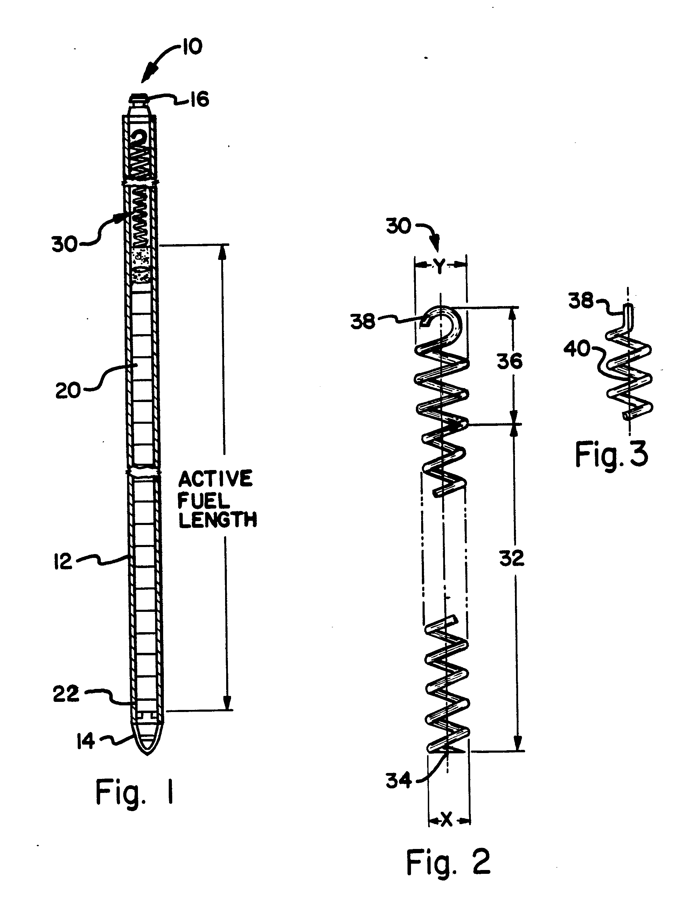

Figure 1 is a schematic cross-sectional elevation view of a nuclear fuel rod embodying the self-locking plenum spring of the invention;

Figure 2 is a schematic elevation view of the spring used in the nuclear fuel rod of Figure 1; and

Figure 3 is a fragmentary side elevation view of the spring of Figures 1 and 2.

## DESCRIPTION OF THE PREFERRED EMBODIMENT

The numeral 10 generally designates a nuclear fuel rod for use in a pressurized water reactor. The fuel rod 10 includes a tube 12 of fuel cladding material, also referred to as a cladding tube, having a lower end cap 14 and an upper end cap 16.

The tube 12 of the cladding material is typically of an outside diameter (O.D.) of 0.382 inches and a wall thickness of 0.025 inches and is a Zircaloy-4 material. This material provides low thermal neutron absorption cross section, good corrosion resistance in the water coolant, good hydriding behavior compared to Zircaloy-2 and good strength properties.

Within the tube 12, in what is called the "active fuel length", is a column of uranium dioxide ($UO_2$) pellets 20 of low enrichment. They are designed, typically, to achieve average burnups which are about 45,000 MWD/MTU and peak burnups of about 52,000 MWD/MTU. Factors limiting this burnup of the fuel are the effects on the cladding of volumetric changes of the fuel pellet and pressure buildup due to fission gas release. The invention gives more available plenum volume for improvement of these figures.

The pellets 20 are essentially 0.325 inches in diameter and are 0.390 inches long. They are high density fuel pellets dished at both ends to allow for axial differential thermal expansion and fuel volumetric growth with burnup. A suitable spacer 22 may be used at the column ends or between pellets in a manner known in the art.

Above the column of pellets 20 of the active fuel length is the self-locking plenum spring of the invention, which is generally designated by the numeral 30.

The spring 30 has active region 32 for biasing the column of pellets 20. The region 32 is made up of a suitable number of substantially identical spring coils having a common outer diameter "x" which is smaller than the inner diameter of tube 12 to provide free clearance of the region 32 with the cladding material. The lower end coil 34 nearest the column of pellets 20 is squared, as by grinding, to a transversely extending flat surface which minimizes friction with adjacent pellet 20 or spacer 22, as the case may be.

The opposite end portion of spring 30 defines the self-locking region 36 having a suitable number of substantially identical spring coils having a common outer diameter "y" which is larger than the inner diameter of tube 12 to permit gripping engagement therewith to hold the spring 30 in the proper axial position as described above. The end coil nearest the end cap 16 terminates in a means for applying torque to the self-locking region 36 in the form of a bight 38 lying wholly within the inner diameter of the tube 12 in an axis of symmetry 40 of the spring coils.

The coils of active region 32 and the coils of self-locking region 36 are preferably connected directly or with no more than three transition coils of intermediate diameter, in the range bracketed by diameters "x" and "y", between them.

Accordingly, the invention provides a fuel rod plenum spring design which offers both manufacturing and performance advantages.

## Claims

1. In a nuclear fuel rod having a tube of cladding material with an active fuel length of a column of pellets and a plenum having an end cap and containing a coil spring to bias the column of pellets, the improvement comprising:
said spring being of a design having a column biasing active region and a self-locking region,
said column biasing active region having coils of an outer diameter smaller than the inner diameter of said tube to provide free clearance of the region with the cladding, and
said self-locking region having coils with a natural diameter larger than that of the inner diameter of said tube to hold the spring in the proper axial position.

2. The nuclear fuel rod of claim 1 in which the end coil nearest the column is squared to a transversely extending flat surface.

3. The nuclear fuel rod of claim 1 in which the end coil nearest the end cap terminates in a means for applying torque to the self-locking region.

4. The nuclear fuel rod of claim 1 in which the end coil nearest the end cap terminates in a bight lying in an axis of symmetry of the spring coils.

5. The nuclear fuel rod of claim 1 in which the end coil nearest the end cap terminates in a bight lying wholly within the inner diameter of said tube.

6. The nuclear fuel rod of claim 1 in which the active region coils and the self-locking region coils are connected directly or with no more than three transition coils of intermediate diameter between them.

Fig. 1

ACTIVE
FUEL
LENGTH

Fig. 2

Fig. 3